# EUROPÄISCHE PATENTSCHRIFT

(11) **EP 4 465 184 B1**
(45) Veröffentlichungstag und Bekanntmachung des Hinweises auf die Patenterteilung: **29.07.2026**
(21) Anmeldenummer: 23174035.8
(22) Anmeldetag: 17.05.2023
(51) Int. Cl.: G06F 12/02

(54) **BESCHREIBEN UND LÖSCHEN VON SEKTOREN IN WEAR-LEVELED MEMORY**
WRITING AND ERASING SECTORS IN WEAR-LEVEL MEMORY
ÉCRITURE ET EFFACEMENT DE SECTEURS DANS UNE MÉMOIRE À NIVEAU WEAR

(43) Veröffentlichungstag der Anmeldung: 20.11.2024
(73) Patentinhaber: ise Individuelle Software und Elektronik GmbH, 26122 Oldenburg (DE)
(72) Erfinder: Südkamp, Henning, 26127 Oldenburg (DE)
(74) Vertreter: Angerhausen, Christoph

(56) Entgegenhaltungen:
- US-A1- 2018 129 445
- US-A1- 2021 223 962

## Beschreibung

### TECHNISCHES GEBIET

Die hier offenbarte Erfindung liegt auf dem technischen Gebiet der effizienten Nutzung digitaler Speicher, insbesondere nichtflüchtiger Flash-Speicher.

### HINTERGRUND

Flüchtige Speicher verlieren bei einem Stromausfall, etwa bei verbrauchter Batterie, ihre Daten. Daher könnten Daten von vornherein in nichtflüchtige Flash-Speicher geschrieben werden oder sowohl in flüchtige als auch nichtflüchtige Flash-Speicher. Jedoch sind nichtflüchtige Flash-Speicher in der Regel langsamer als flüchtige Speicher; dies trifft insbesondere auf das Löschen zu. Ein nichtflüchtiger Flash-Speicher ist in gleich große, löschbare Speicherregionen (Sektoren) unterteilt. Ein Löschvorgang in einem nichtflüchtigen Flash-Speicher versetzt alle Bits in dem ganzen Sektor in den Zustand "1". Ein Schreibvorgang hingegen kann beliebige Bits vom Zustand "1" in den Zustand "0" versetzen, aber niemals ein Bit aus dem Zustand "0" wieder in den Zustand "1" bringen. Somit muss ein ganzer Sektor zunächst gelöscht werden, bevor dieser neu beschrieben werden kann. Darüber hinaus können Daten auch bei nichtflüchtigen Flash-Speichern verlorengehen, etwa wenn ein laufender Schreibvorgang durch einen Stromausfall abgebrochen wird. Nichtflüchtige Flash-Speicher können nur einer begrenzten Anzahl von Löschvorgängen unterzogen werden und altern mit der Zeit. Die hier offenbarte Erfindung nutzt eine Form von "wear-leveling" um diesem Problem zu begegnen.

US 2021/223962 A1 offenbart: Gemäß einer Ausführungsform führt ein Controller eines Speichersystems eine erste Operation mehrmals für jeden von mehreren ersten Blöcken aus. Die erste Operation umfasst einen Schreibvorgang zum Schreiben von Daten in einem ersten Schreibmodus mit m-Bit-Daten pro Speicherzelle und einen Datenlöschvorgang. Ist ein zweiter Block nicht defekt, führt der Controller eine zweite Operation mehrmals für den zweiten Block aus. Die zweite Operation umfasst einen Schreibvorgang zum Schreiben von Daten in einem zweiten Schreibmodus mit n-Bit-Daten pro Speicherzelle und einen Datenlöschvorgang. Ist der zweite Block defekt, wählt der Controller einen ersten Block aus den mehreren ersten Blöcken aus und schreibt im zweiten Schreibmodus zweite Schreibdaten in den ausgewählten ersten Block.

US 2018/129445 A1 offenbart: Ein Speichersystem kann Folgendes umfassen: ein Speichergerät; und einen Controller, der konfiguriert ist, um: einen Lesevorgang und einen Löschvorgang für das Speichergerät auszuführen; eine erste erforderliche Zeit vorherzusagen, wenn während der Ausführung des Löschvorgangs ein Lesebefehl empfangen wird, wobei die erste erforderliche Zeit auf einer Summe basiert, die eine erste für den Lesevorgang als Reaktion auf den Lesebefehl erforderliche Zeit und eine zweite für den laufenden Löschvorgang erforderliche Zeit umfasst; und zu bestimmen, ob der Löschvorgang entsprechend der ersten erforderlichen Zeit angehalten oder fortgesetzt werden soll.

### ZUSAMMENFASSUNG

Die Erfindung ergibt sich aus den beigefügten Ansprüchen. Ausführungsformen der Erfindung betreffen Verfahren, umfassend: Speichern von Daten in einem nichtflüchtigen Flash-Speicher, der in Sektoren unterteilt ist, wobei die Daten in aufeinanderfolgende Sektoren gespeichert werden und jeweils in einen neuen Sektor geschrieben werden, wenn die Daten als Ganzes nicht mehr in einen bisher verwendeten Sektor passen; wobei als Reaktion auf das Beschreiben eines neuen Sektors ein Prozess nicht-invalidierten Inhalt des ältesten beschriebenen Sektors des Speichers einliest, in den nächsten Sektor schreibt und den ältesten Sektor löscht, wobei der Löschvorgang angehalten wird, wenn während des Löschvorgangs ein Schreib- oder Leseauftrag eintrifft, und wobei der angehaltene Löschvorgang fortgesetzt wird, wenn der Schreib- oder Leseauftrag abgeschlossen ist. Nach Abschluss eines Schreibvorgangs wird ein erster Adresszeiger auf die erste freie Adresse nach den geschriebenen Daten gesetzt. Nach Abschluss des Löschvorgangs wird ein zweiter Adresszeiger auf den Sektor, der auf den gelöschten Sektor folgt, gesetzt. Das Speichern von Daten in einen neuen Sektor anhand des ersten Adresszeigers und das Löschen des ältesten beschriebenen Sektors erfolgt anhand des zweiten Adresszeigers.

Weitere Ausführungsformen betreffen eine Vorrichtung, umfassend einen Speicher, der in Sektoren eingeteilt ist; wobei die Vorrichtung eingerichtet ist, Daten in aufeinanderfolgenden Sektoren des Speichers zu speichern und jeweils in einen neuen Sektor zu schreiben, wenn die Daten als Ganzes nicht mehr in einen bisher verwendeten passen; und wobei die Vorrichtung ferner eingerichtet ist, als Reaktion auf das Beschreiben eines neuen Sektors durch einen Prozess nicht-invalidierten Inhalt des ältesten Sektors des Speichers einzulesen, in den nächsten Sektor zu schreiben und den ältesten beschriebenen Sektor zu löschen, wobei der Löschvorgang angehalten wird, wenn während des Löschvorgangs ein Schreib- oder Leseauftrag eintrifft, und wobei der angehaltene Löschvorgang fortgesetzt wird, wenn der Schreib- oder Leseauftrag abgeschlossen ist. Die Vorrichtung ist ferner eingerichtet, nach Abschluss eines Schreibvorgangs einen ersten Adresszeiger auf die erste freie Adresse nach den geschriebenen Daten zu setzen und nach Abschluss eines Löschvorgangs einen zweiten Adresszeiger auf den Sektor, der auf den zuletzt gelöschten Sektor folgt, zu setzen. Das Speichern von Daten in einen neuen Sektor erfolgt anhand des ersten Adresszeigers und das Löschen des ältesten beschriebenen Sektors anhand des zweiten Adresszeigers.

Ausführungsformen betreffen außerdem computerlesbare Medien mit darauf gespeicherten Befehlen, die, wenn sie durch einen Prozessor ausgeführt werden, eines der hier beschriebenen Verfahren durchführen.

### KURZE BESCHREIBUNG DER ZEICHNUNGEN

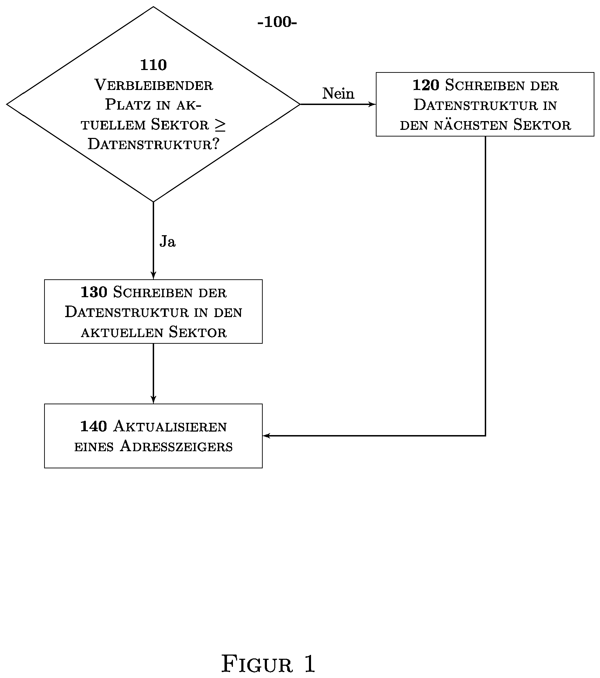

Figuren 1 bis 5B zeigen Verfahren nach Ausführungsformen der Erfindung.

### AUSFÜHRLICHE BESCHREIBUNG

Die Erfindung betrifft die Verwaltung eines nichtflüchtigen Speichers, insbesondere eines Flash-Speichers. Derartige Speicher sind in löschbare Sektoren unterteilt und zeichnen sich dadurch aus, dass das Löschen von Sektoren erheblich länger dauert als das Schreiben von Daten. Dies kann zu starken Verzögerungen im Speicherbetrieb führen.

Ausführungsformen der Erfindung begegnen diesem Problem durch mehrere Maßnahmen. Eine erste Maßnahme ist das Speichern von Daten in aufeinanderfolgende Sektoren. Hierbei werden Daten zunächst nacheinander in einen Sektor geschrieben, bis dieser vollständig belegt ist. Anschließend wird der nachfolgende Sektor beschrieben. Die Daten liegen insbesondere in Form von Datenstrukturen vor, die jeweils in genau einen Sektor geschrieben werden sollen. Ein Sektor kann mehrere Datenstrukturen enthalten, jedoch soll eine Datenstruktur nicht auf mehrere Sektoren verteilt werden. Um eine Datenstruktur zu schreiben, wird daher zunächst geprüft, ob ein aktueller Sektor hinter einer zuletzt beschriebenen Adresse noch genügend Speicherplatz für die Datenstruktur enthält. Ist dies der Fall, wird die Datenstruktur an diese Adresse geschrieben. Andernfalls wird die Datenstruktur in den nachfolgenden Sektor geschrieben.

Die Entscheidung, ob in einen aktuellen oder in den nächsten Sektor geschrieben wird, erfolgt anhand eines Adresszeigers. Dieser zeigt bei Erhalt der Datenstruktur auf die erste freie Adresse hinter zuletzt geschriebenen Daten. Um zu ermitteln, ob der aktuelle Sektor über genügend freien Platz für die Datenstruktur verfügt, wird der verbleibende Platz zwischen der betreffenden Adresse und dem Ende des Sektors bestimmt und mit der Größe der Datenstruktur verglichen. Ist der noch zur Verfügung stehende Platz größer oder gleich groß, wird die Datenstruktur in den aktuellen Sektor geschrieben, andernfalls in den nächsten Sektor, beginnend mit dessen erster Adresse. Anschließend wird der Adresszeiger auf die erste freie Adresse hinter der geschriebenen Datenstruktur aktualisiert.

Figur 1 zeigt ein beispielhaftes Verfahren 100 zum Schreiben von Daten. In Schritt 110 wird ermittelt, ob eine zu speichernde Datenstruktur in einen aktuellen Sektor des Speichers passt. Der aktuelle Sektor kann insbesondere durch einen Adresszeiger (erster Adresszeiger) ermittelt werden, der auf eine Adresse in diesem Sektor zeigt. Ist der verbleibende Platz in diesem Sektor größer als oder gleich groß wie die Datenstruktur, wird diese in Schritt 130 in den Sektor geschrieben. Ist die Datenstruktur hingegen größer als der verbleibende Platz, wird die Datenstruktur in Schritt 120 in den nachfolgenden Sektor geschrieben. In beiden Fällen wird der erste Adresszeiger anschließend auf die nächste freie Adresse hinter der Datenstruktur gesetzt. War die Datenstruktur genauso groß wie der verbleibende Platz im aktuellen Sektor, zeigt der Adresszeiger nach Schritt 140 auf den Beginn des nachfolgenden Sektors. War die Datenstruktur kleiner, zeigt der erste Adresszeiger auf die Adresse hinter der Datenstruktur im aktuellen Sektor. War die Datenstruktur größer, zeigt der Adresszeiger auf die Adresse hinter der Datenstruktur im nachfolgenden Sektor.

In einer Ausführungsform wird fortlaufend geprüft, ältere Daten aus dem Speicher an die durch den Adresszeiger bezeichnete Adresse zu kopieren und an der alten Stelle zu invalidieren. Zu diesem Zweck kann ein zweiter Adresszeiger vorgesehen sein, der auf die älteste beschriebene Adresse oder den ältesten beschriebenen Sektor zeigt, insbesondere auf das erste Byte in diesem Sektor. Die Daten an dieser Adresse beziehungsweise in diesem Sektor werden gelesen und nach der oben erläuterten Vorgehensweise in den aktuellen Sektor beziehungsweise den nächsten Sektor geschrieben. Zuletzt werden die Daten an der alten Stelle invalidiert und der zweite Adresszeiger aktualisiert, so dass er auf die nunmehr älteste beschriebene Adresse oder den ältesten Sektor zeigt.

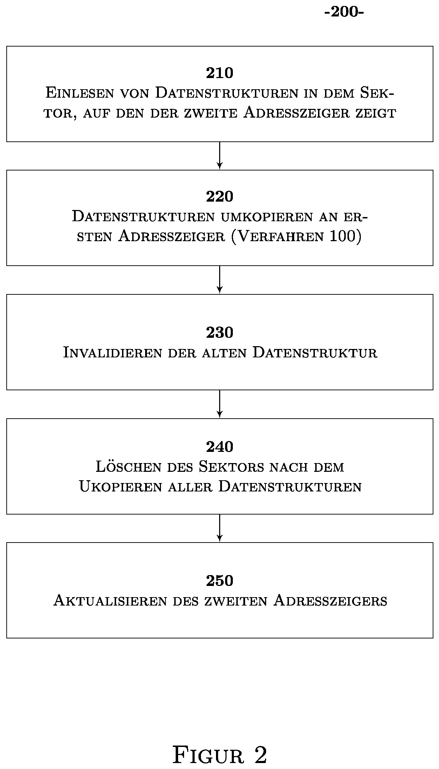

Figur 2 zeigt ein beispielhaftes Verfahren 200 zum Umkopieren von Datenstrukturen und anschließendem Löschen des Sektors. In Schritt 210 ermittelt das Verfahren die älteste Adresse, an die Daten in den Speicher geschrieben wurden. Diese Adresse kann anhand eines zweiten Adresszeigers ermittelt werden, der auf den Sektor zeigt, der Datenstrukturen enthält, deren Speicherung am längsten zurückliegt. Alle in diesem Sektor enthaltenen Datenstrukturen werden nacheinander eingelesen und jeweils in Schritt 220 umkopiert und anschließend in Schritt 230 invalidiert. In Schritt 220 werden die Daten an die durch den ersten Adresszeiger bezeichnete Stelle gespeichert. Schritt 220 kann sämtliche Schritte des Verfahrens 100 umfassen, indem für die betreffende Datenstruktur geprüft wird, ob diese in einen aktuellen Sektor passt und indem die Datenstruktur anschließend in den aktuellen oder den nachfolgenden Sektor geschrieben wird. Zuletzt wird der erste Adresszeiger aktualisiert (Schritt 140). In Schritt 230 werden die umkopierten Datenstrukturen an der alten Stelle im Speicher invalidiert. Sobald alle Datenstrukturen aus dem Sektor umkopiert wurden, befinden sich nur noch invalidierte Datenstrukturen in diesem Sektor. In Schritt 240 kann der Sektor jetzt gelöscht werden. Zuletzt wird in Schritt 250 der zweite Adresszeiger aktualisiert, so dass dieser auf die Adressen beziehungsweise den Sektor mit den nunmehr ältesten Daten zeigt.

In einer Ausführungsform werden beim Umkopieren älterer Daten lediglich solche Daten berücksichtigt, die bislang nicht invalidiert wurden. Das Invalidieren von Daten bezeichnet die Möglichkeit, Daten als ungültig zu markieren. In einer Ausführungsform werden Daten grundsätzlich mit einer Prüfzahl, insbesondere einem Cyclic Redundancy Check (CRC), versehen. Die Prüfzahl gibt somit an, ob die betreffenden Daten korrekt geschrieben wurden. Passt die Prüfzahl nicht zu den Daten, kann dies unterschiedliche Ursachen haben. Beispielsweise passt die Prüfzahl nicht zu den Daten, wenn der Schreibvorgang, in dem diese Daten geschrieben wurden, abgebrochen worden war. Diese Möglichkeit besteht, wenn während eines laufenden Schreibvorgangs die Stromversorgung, beispielsweise aufgrund verbrauchter Batterie, abbricht. In einer besonderen Ausführungsform kann die Diskrepanz zwischen Prüfzahl und betreffenden Daten auch gezielt herbeigeführt werden, um die Daten als ungültig zu markieren, wie im Folgenden beschrieben wird.

Bei nichtflüchtigen Flash-Speichern können Daten nicht ohne weiteres überschrieben werden. Vielmehr müssen die zu ändernden Daten zunächst in einem flüchtigen Speicher zwischengespeichert, der zugrundeliegende Sektor gelöscht und anschließend neu geschrieben werden. Wie bereits erwähnt wurde, ist das Löschen von Sektoren relativ zeitaufwendig. Um diesem Nachteil zu begegnen, ist eine Ausführungsform vorgesehen, in der diese Daten lediglich invalidiert werden. Die zu schreibenden geänderten Daten werden nicht an die Stelle der invalidierten Daten geschrieben, sondern an die aktuelle Position des ersten Adresszeigers, der in der Folge auf die erste freie Stelle hinter den geschriebenen Daten gesetzt wird. Die invalidierten Daten werden, wie ebenfalls bereits erwähnt, beim fortwährenden Umkopieren von Datenstrukturen nicht berücksichtigt, so dass das Schreiben veränderter Daten durch Löschen von Sektoren nicht verzögert wird.

In einer Ausführungsform wird allen Datenstrukturen ein Bezeichner vorangestellt, der das Format der jeweiligen Datenstruktur angibt. Die oben beschriebene Prüfzahl wird anhand der Daten und auch dieses Bezeichners erzeugt. Um eine Datenstruktur zu invalidieren, wird in einer Ausführungsform lediglich der Bezeichner geändert, mit der Wirkung, dass die Prüfzahl nicht mehr zu der Datenstruktur passt und diese somit als ungültig markiert ist. In einer ersten Ausführungsform wird der Bezeichner geändert, indem ein beliebiges festes Bit des Bezeichners invertiert wird. In einer zweiten Ausführungsform werden die Bezeichner von vornherein so gewählt, dass sie eine vorbestimmte Bitsequenz enthalten, die (für gültige Daten) immer gleich ist. Um einen Bezeichner als ungültig zu markieren, genügt somit das Invertieren eines beliebigen festen beispielsweise auf "1" gesetzten Bits dieser Sequenz. In einer besonders vorteilhaften Ausführungsform wird zur Prüfung, ob eine gespeicherte Datenstruktur gültig ist, zunächst der Bezeichner untersucht: Ist das betreffende beliebige feste Bit geändert worden, steht fest, dass die zugehörige Datenstruktur geändert wurde und somit ungültig ist; die Prüfzahl braucht in diesem Fall nicht mehr untersucht zu werden. Dies erspart Rechenaufwand, da die Prüfung einer Prüfzahl gewöhnlich mit der Anwendung bestimmter Algorithmen einhergeht, die erheblich größeren Aufwand erfordern als das Prüfen eines einzelnen Bits.

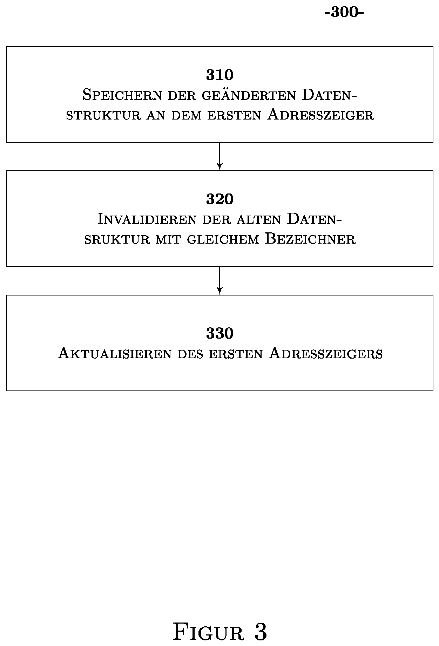

Figur 3 zeigt ein Verfahren 300 zum Aktualisieren von Daten. Schritt 310 umfasst zunächst das Speichern der aktualisierten Datenstruktur, die die bisherige Datenstruktur ersetzen soll. Die aktualisierte Datenstruktur wird an die Adresse geschrieben, auf die der erste Adresszeiger zeigt. In Schritt 320 wird die bisherige Datenstruktur, die aktualisiert werden soll, invalidiert, beispielsweise durch Ändern eines Bits in einem Bezeichner, der der Datenstruktur vorangestellt ist. Der erste Adresszeiger wird in Schritt 330 aktualisiert, so dass er auf die erste freie Stelle nach der geschriebenen Datenstruktur zeigt.

Wie bereits erläutert, wird fortlaufend geprüft, ob die ältesten Daten des Speichers in neue Sektoren kopiert und an der alten Stelle invalidiert werden können, so dass einerseits ausreichend gelöschte Sektoren vorhanden sind und andererseits eine verdichtete und kompakte Speicherung aller Daten erzielt wird. Zusätzlich werden Schreibvorgänge beschleunigt, in denen Daten in geänderter Form neu in den Speicher geschrieben werden; da die ursprünglichen Daten nicht etwa sofort gelöscht, sondern zunächst nur als ungültig markiert werden, entfallen die Verzögerungen, die durch unmittelbares Löschen der ursprünglichen Daten entstünden. In einer Ausführungsform wird die Handhabung des Speichers noch weiter beschleunigt. Zu diesem Zweck verwendet die Erfindung Befehle, die von einem Controller des Speichers zur Verfügung gestellt werden und die ein vorübergehendes Aussetzen (suspend) und Wiederaufnehmen (resume) eines Löschvorgangs ermöglichen, wie im Folgenden beschrieben wird.

Wie bereits erwähnt, ist das Löschen von Sektoren in nichtflüchtigen Flash-Speichern besonders zeitaufwendig. Wenn neue Daten in den Speicher geschrieben oder aus dem Speicher gelesen werden sollen, muss üblicherweise ein eventuell laufender Löschvorgang zunächst abgewartet werden, so dass eine Verzögerung entsteht. In einer Ausführungsform wird daher bei Eingang eines Schreib- oder Lesebefehls, der auf den Speicher gerichtet ist, zunächst geprüft, ob der Speicher mit einem laufenden Löschvorgang beschäftigt ist (busy). In diesem Fall wird ein Suspend-Befehl an den Speicher beziehungsweise dessen Controller gerichtet. Durch diesen Befehl wird der Löschvorgang vorübergehend angehalten, so dass in der Folge der Schreib- oder Lesebefehl ausgeführt werden kann. Da neue Daten, wie bereits beschrieben, stets in einen aktuellen oder nächsten Sektor geschrieben werden, und da Löschbefehle lediglich zurückliegende Sektoren mit invalidierten Datenstrukturen betreffen, besteht bei einem Lese- oder Schreibbefehl keine Gefahr, in einen Sektor zu schreiben oder aus einem Sektor zu lesen, der gegenwärtig von dem (angehaltenen) Löschbefehl betroffen ist.

Ist die Verarbeitung des Schreibbefehls abgeschlossen, kann der ausgesetzte Löschvorgang mittels eines Resume-Befehls an den Speicher wiederaufgenommen werden. Somit erfolgt das Löschen eines Sektors aus Sicht der Schreib-/Lesebefehle vollständig asynchron im Hintergrund, ohne diese zu verzögern.

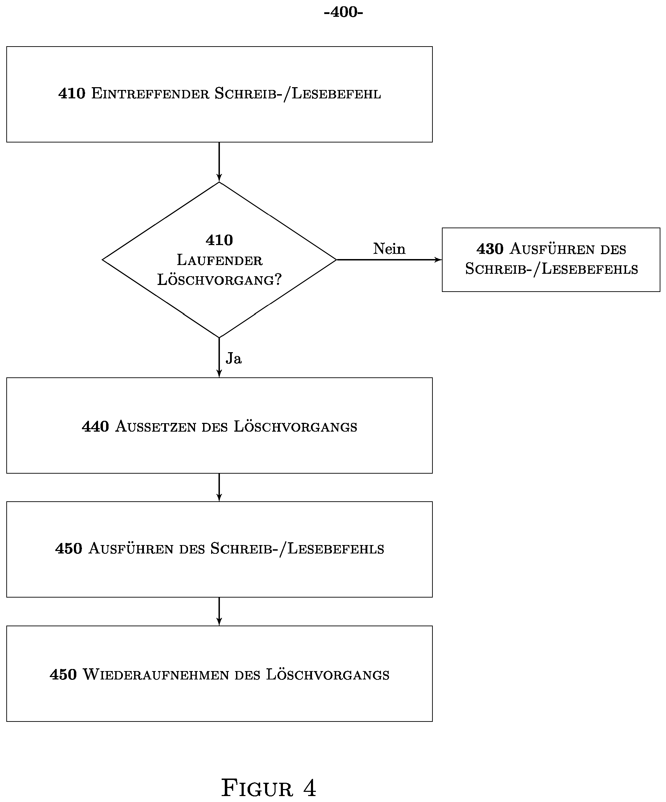

Figur 4 zeigt ein Verfahren 400 zum Schreiben von Daten bei gleichzeitiger Durchführung eines Löschvorgangs. In Schritt 410 erhält das Verfahren 400 Daten, die gespeichert werden sollen oder auf die lesend zugegriffen werden soll, beispielsweise in Form eines Schreib- oder Lesebefehls, der die zu schreibenden Daten beziehungsweise eine Adresse mit zu lesenden Daten enthält. Bevor Daten geschrieben oder gelesen werden, prüft das Verfahren in Schritt 420 zunächst, ob der Speicher derzeit einem Löschvorgang unterliegt; es könnte sich beispielsweise um einen Löschvorgang aus Verfahren 200 handeln. Stellt sich in Schritt 420 heraus, dass der Speicher derzeit einem Löschvorgang unterliegt, hält das Verfahren 400 diesen Löschvorgang in Schritt 440 an, beispielsweise mittels eines Suspend-Befehls, den der Speicher zur Verfügung stellt. Anschließend werden in Schritt 450 die Daten geschrieben oder gelesen und in Schritt 460 der Löschvorgang mittels Resume-Befehl wieder aktiviert. Wenn die Prüfung bei Schritt 420 negativ ausfällt (kein Löschvorgang), kann der Schreib- oder Lesebefehl in Schritt 430 direkt ausgeführt werden.

Die oben erläuterten Ausführungsformen bewirken, dass Daten in hoher Dichte gespeichert werden. Zudem wandern die gespeicherten Daten fortwährend in Richtung des Speicherendes. In einer Ausführungsform ist der Speicher als Ringspeicher organisiert. Zu diesem Zweck wird der erste Adresszeiger, der fortwährend auf die erste freie Stelle im Speicher hinter den zuletzt gespeicherten Daten aktualisiert wird, auf den ersten Sektor des Speichers gesetzt, wenn der letzte Sektor des Speichers erreicht ist und für das Speichern einer Datenstruktur nicht mehr ausreicht. Zudem wird der zweite Adresszeiger auf den ersten Sektor des Speichers gesetzt, wenn der letzte Sektor des Speichers gelöscht wurde. Auf diese Weise kann das fortlaufende Umkopieren von Datenstrukturen beliebig lange fortgesetzt werden.

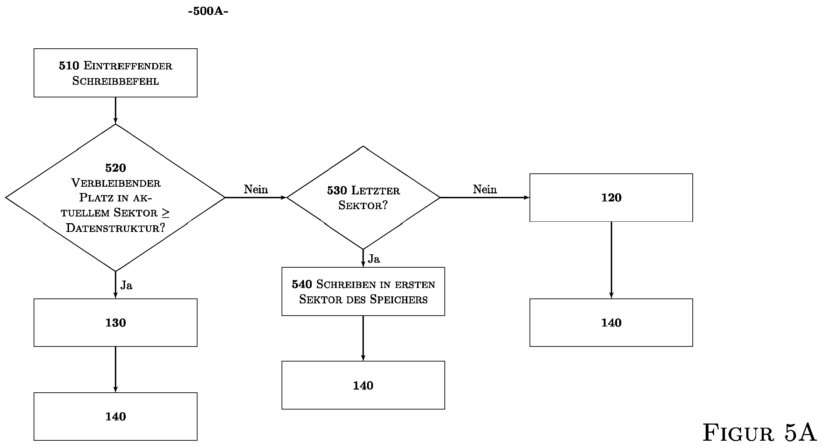

Figur 5A zeigt ein Verfahren 500A zum Wechseln vom Ende eines Speichers zu dessen Anfang, wenn Daten geschrieben werden. In Schritt 510 erhält das Verfahren 500 einen Befehl zum Speichern von Daten. In Schritt 520 prüft das Verfahren, ob der verbleibende Platz des aktuellen Sektors in dem Speicher für die Speicherung der Daten ausreicht; dieser Schritt ist analog zu Schritt 110 des Verfahrens 100; die Adresse, an die geschrieben werden soll, wird vorzugsweise anhand des ersten Adresszeigers ermittelt. Reicht der freie Platz aus, um die Daten vollständig zu schreiben, führt das Verfahren 500A die Schritt 130 und 140 aus; diese erfolgen analog zu den Schritten 130 und 140 des Verfahrens 100.

Reicht der freie Platz nicht zum Speichern der Daten aus, prüft das Verfahren 500A bei Schritt 530, ob es sich bei dem aktuellen Sektor um den letzten Sektor des Speichers handelt. Ist dies der Fall, schreibt das Verfahren 500A die Daten bei Schritt 540 in den ersten Sektor des Speichers und aktualisiert in einem nachfolgenden Schritt 140 den ersten Adresszeiger auf die erste freie Stelle hinter den Daten im Speicher. Handelt es sich bei dem aktuellen Sektor nicht um den letzten Sektor, werden die Daten analog zum Verfahren 100 in den nächsten Sektor geschrieben (Schritt 120) und der erste Adresszeiger entsprechend aktualisiert (Schritt 140).

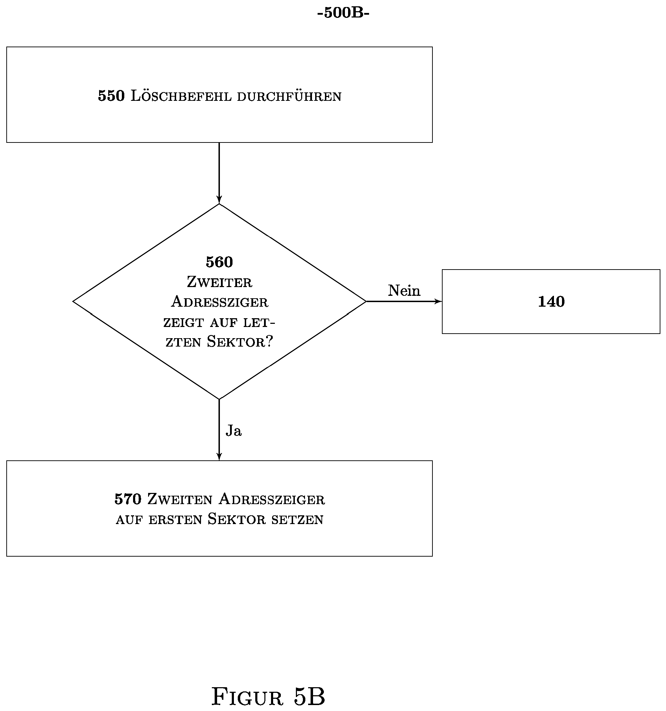

Figur 5B zeigt ein Verfahren 500B zum Wechseln vom Ende eines Speichers zu dessen Anfang, wenn ein Sektor gelöscht wird. In Schritt 550 erhält das Verfahren 500B einen Befehl zum Löschen eines Sektors, beispielsweise um einen Löschvorgang aus Verfahren 200 durchzuführen. In Schritt 560 prüft das Verfahren 500B, ob der zweite Adresszeiger auf den letzten Sektor des Speichers zeigt. Ist dies der Fall, wird der Sektor gelöscht und anschließend der zweite Adresszeiger in Schritt 570 auf den ersten Sektor des Speichers gesetzt. Verläuft die Prüfung bei Schritt 560 negativ, wird der zweite Adresszeiger in Schritt 140 wie bereits beschrieben auf den nächsten Sektor des Speichers aktualisiert, sobald der Sektor gelöscht wurde.

Die oben beschriebenen Ausführungsformen können mithilfe bestimmter Tabellen und Datenformaten implementiert werden. In einer Ausführungsform sind der erste und der zweite Adresszeiger in einer ersten Verwaltungs-Datenstruktur abgelegt, die vorzugsweise in einem flüchtigen Speicher abgelegt ist.

Ferner kann eine zweite Verwaltungs-Datenstruktur, die vorzugsweise in einem flüchtigen Speicher abgelegt ist, vorgesehen sein, die in Form einer Tabelle für jede gespeicherte Datenstruktur deren Größe sowie den Bezeichner des verwendeten Formats und auch die Speicheradresse enthält, an der die jeweilige Datenstruktur aktuell im nichtflüchtigen Flash-Speicher gespeichert ist.

Die genannten Verwaltungs-Datenstrukturen können im Laufe der hier beschriebenen Verfahren jeweils aktualisiert werden und geben somit den jeweiligen Zustand des nichtflüchtigen Flash-Speichers wieder.

Weitere Datenstrukturen sind durch die im nichtflüchtigen Flash-Speicher gespeicherten Datenstrukturen selbst gegeben: Diese Datenstrukturen enthalten, wie bereits beschrieben, neben den eigentlichen Daten einen Formatbezeichner und eine Prüfzahl.

Ausführungsformen der Erfindung betreffen auch Vorrichtungen, die eingerichtet sind, die hier beschriebenen Verfahren durchzuführen. Diese Vorrichtungen sind in der Regel batteriebetrieben und kommunizieren mit einem Netzwerk, vorzugsweise einem Funknetzwerk, um Datensendungen, hier auch als Telegramme bezeichnet, zu empfangen.

Die Vorrichtung enthält neben flüchtigen Speichern auch nichtflüchtige Flash-Speicher sowie einen Controller. Der Controller ist in einer Ausführungsform in der Lage Prozesse sequentiell, also einen Prozess nach dem anderen auszuführen. Die bereits beschriebenen Verfahren können auf dem Controller in Form dieser Prozesse ablaufen. Insbesondere umfassen diese einen ersten Prozess, der auf eintreffende Telegramme reagiert. Der Prozess startet Schreibvorgänge, um Telegramme oder Teile derselben in den nichtflüchtigen Flash-Speicher zu schreiben, und startet Lesevorgänge, um Daten zu bestimmten Telegrammen oder Teilen derselben aus dem Speicher abzufragen. Der Ablauf eines Schreibvorgangs geht beispielsweise mit einem der Verfahren 100, 300, 400 oder 500A einher.

Ein zweiter Prozess dient dem bereits beschriebenen fortwährenden Umkopieren von Datenstrukturen aus älteren Sektoren an die Spitze des beschriebenen Teils des Speichers unter Verwendung von zwei Adresszeigern und gemäß dem Verfahren 200, mit dem Ziel, den älteren Sektor nach dem Umkopieren zu löschen.

Der erste und zweite Prozess werden im Wechsel ausgeführt. In einer Ausführungsform kann der zweite Prozess mehrmals in Folge ausgeführt werden, wenn nach dem Umkopieren von Datenstrukturen eines Sektors festgestellt wird, dass auch der nachfolgende Sektor bereits beschrieben ist und die Kriterien für ein Umkopieren von Datenstrukturen erfüllt sind. In einer Ausführungsform wird als Kriterium für ein Umkopieren von Datenstrukturen der Abstand zwischen dem ersten und dem zweiten Adresszeiger herangezogen. Ist der Abstand größer als ein Sektor, kann der zweite Prozess alle Datenstrukturen des älteren Sektors umkopieren, um diesen anschließend zu löschen, gemäß dem Verfahren 200.

Um ein eintreffendes Telegramm ohne Verzögerung zu verarbeiten, kann der Controller mittels eines Interrupts in seiner Arbeit unterbrochen werden. Erhält der Controller einen solchen Interrupt, unterbricht dieser den derzeit laufenden Prozess und löst einen dritten Prozess als Interrupt Service Routine aus. Dieser dritte Prozess prüft, ob aktuell ein Löschvorgang ausgeführt wird, und unterbricht diesen (suspend). In der Folge darf ein Lesevorgang ausgelöst werden, der auf den Speicher zugreift. Im Anschluss wird der unterbrochene Löschvorgang wieder aufgenommen (resume). In einer Ausführungsform werden Interrupts in bestimmten Situationen gesperrt, beispielsweise während des Einlesens gültiger Daten aus einem Sektor (Schritt 210 in Verfahren 200) oder während des Schreibens von Daten in einen Sektor (Schritt 220 in Verfahren 200), damit ein laufender Lese- oder Schreibvorgang nicht von einem Interrupt, der über einen dritten Prozess wiederum einen Lesevorgang anstoßen könnte, unterbrochen werden kann.

## Patentansprüche

1. Verfahren, umfassend:
Speichern von Daten in einem nichtflüchtigen Flash-Speicher, der in Sektoren unterteilt ist, wobei die Daten in aufeinanderfolgende Sektoren gespeichert werden und jeweils in einen neuen Sektor geschrieben werden (120), wenn die Daten als Ganzes nicht mehr in einen bisher verwendeten Sektor passen (110);
wobei als Reaktion auf das Beschreiben eines neuen Sektors (120) ein Prozess nicht-invalidierten Inhalt des ältesten beschriebenen Sektors des Speichers einliest (210), in den nächsten Sektor schreibt (220) und den ältesten Sektor löscht (240);
**dadurch gekennzeichnet, dass** der Löschvorgang angehalten wird (440), wenn während des Löschvorgangs ein Schreib- oder Leseauftrag eintrifft (410), und wobei der angehaltene Löschvorgang fortgesetzt wird (460), wenn der Schreib- oder Leseauftrag abgeschlossen ist (450);
wobei nach Abschluss eines Schreibvorgangs ein erster Adresszeiger auf die erste freie Adresse nach den geschriebenen Daten gesetzt wird (140);
wobei nach Abschluss des Löschvorgangs ein zweiter Adresszeiger auf den Sektor, der auf den gelöschten Sektor folgt, gesetzt wird (250); und
wobei das Speichern von Daten in einen neuen Sektor (120) anhand des ersten Adresszeigers und das Löschen des ältesten beschriebenen Sektors (240) anhand des zweiten Adresszeigers erfolgt.

2. Verfahren nach Anspruch 1, wobei der erste Adresszeiger nach Abschluss des Schreibvorgangs auf den ersten freien Sektor des Speichers gerichtet wird (140, 330), wenn der bisher verwendete Sektor der letzte Sektor des Speichers ist (530) und die Daten als Ganzes nicht mehr in diesen Sektor passen (520); und
wobei der zweite Adresszeiger nach Abschluss des Löschvorgangs auf den ersten beschriebenen Sektor des Speichers gesetzt wird (570), wenn der zuletzt gelöschte Sektor der letzte Sektor des Speichers ist (530).

3. Verfahren nach einem der vorstehenden Ansprüche, wobei das Schreiben umfasst, für jede geschriebene Datenstruktur einen Bezeichner eines Formats der Datenstruktur und eine Prüfzahl zu speichern.

4. Verfahren nach Anspruch 3, wobei nicht-invalidierter Inhalt eine Datenstruktur umfasst, deren Prüfzahl gültig ist.

5. Verfahren nach Anspruch 3 oder 4, wobei die Prüfzahl ein Cyclic Redundancy Check, CRC, ist.

6. Verfahren nach einem der Ansprüche 3 bis 5, wobei ein Schreibauftrag Daten, die bereits geschrieben wurden, in geänderter Form erneut schreibt (310), und wobei die bereits geschriebenen Daten nach Abschluss des Schreibauftrags invalidiert werden (320), insbesondere wobei das Invalidieren umfasst, den Bezeichner des Formats der geschriebenen Daten zu verändern.

7. Vorrichtung, umfassend einen Speicher, der in Sektoren eingeteilt ist;
wobei die Vorrichtung eingerichtet ist, Daten in aufeinanderfolgenden Sektoren des Speichers zu speichern und jeweils in einen neuen Sektor zu schreiben (120), wenn die Daten als Ganzes nicht mehr in einen bisher verwendeten Sektor passen (110);
wobei die Vorrichtung ferner eingerichtet ist, als Reaktion auf das Beschreiben eines neuen Sektors (120) durch einen Prozess nicht-invalidierten Inhalt des ältesten Sektors des Speichers einzulesen (210), in den nächsten Sektor zu schreiben (220) und den ältesten beschriebenen Sektor zu löschen (240);
**dadurch gekennzeichnet, dass** der Löschvorgang angehalten wird (440), wenn während des Löschvorgangs ein Schreib- oder Leseauftrag eintrifft (410), und wobei der angehaltene Löschvorgang fortgesetzt wird (460), wenn der Schreib- oder Leseauftrag abgeschlossen ist (450);
wobei die Vorrichtung ferner eingerichtet ist, nach Abschluss eines Schreibvorgangs einen ersten Adresszeiger auf die erste freie Adresse nach den geschriebenen Daten zu setzen (140);
wobei die Vorrichtung ferner eingerichtet ist, nach Abschluss eines Löschvorgangs einen zweiten Adresszeiger auf den Sektor, der auf den zuletzt gelöschten Sektor folgt, zu setzen (250); und
wobei das Speichern von Daten in einen neuen Sektor (120) anhand des ersten Adresszeigers und das Löschen des ältesten beschriebenen Sektors (240) anhand des zweiten Adresszeigers erfolgt.

8. Vorrichtung nach Anspruch 7, wobei die Vorrichtung ferner eingerichtet ist, nach Abschluss des Schreibvorgangs den ersten Adresszeiger auf den ersten freien Sektor des Speichers zu richten (140, 330), wenn der bisher verwendete Sektor der letzte Sektor des Speichers ist (530) und die Daten als Ganzes nicht mehr in diesen Sektor passen (520); und
wobei die Vorrichtung ferner eingerichtet ist, nach Abschluss des Schreibvorgangs den zweiten Adresszeiger auf den ersten beschriebenen Sektor des Speichers zu setzen (570), wenn der zuletzt gelöschte Sektor der letzte Sektor des Speichers ist (530).

9. Vorrichtung nach einem der Ansprüche 7 bis 8, wobei das Schreiben umfasst, für jede geschriebene Datenstruktur einen Bezeichner eines Formats der Datenstruktur und eine Prüfzahl zu speichern.

10. Vorrichtung nach Anspruch 9, wobei nicht-invalidierter Inhalt eine Datenstruktur umfasst, deren Prüfzahl gültig ist.

11. Vorrichtung nach Anspruch 9 oder 10, wobei die Prüfzahl ein Cyclic Redundancy Check, CRC, ist.

12. Vorrichtung nach einem der Ansprüche 9 bis 11, wobei ein Schreibauftrag Daten, die bereits geschrieben wurden, in geänderter Form erneut schreibt (310), und wobei die bereits geschriebenen Daten nach Abschluss des Schreibauftrags invalidiert werden (320), insbesondere wobei das Invalidieren umfasst, den Bezeichner des Formats der geschriebenen Daten zu verändern.

13. Computerlesbares Medium mit darauf gespeicherten Befehlen, die, wenn sie durch einen Prozessor ausgeführt werden, das Verfahren nach einem der Ansprüche 1 bis 6 durchführen.

## Claims

1. A method comprising:
storing data in a non-volatile flash memory that is divided into sectors, the data being stored in consecutive sectors and each written to a new sector (120) when the data as a whole no longer fits a previously used sector (110);
wherein in response to writing a new sector (120), a process reads in (210) non-invalidated content of the oldest described sector of the memory, writes (220) to the next sector, and erases (240) the oldest sector;
**characterized in that** the erasing operation is stopped (440) when a write or read job arrives (410) during the erasing operation, and wherein the stopped erasing operation is continued (460) when the write or read job is completed (450);
wherein upon completion of a write operation, a first address pointer is set (140) to the first free address after the written data;
wherein upon completion of the erasing operation, a second address pointer is set (250) to the sector following the erased sector; and
wherein storing data to a new sector (120) is done using the first address pointer and erasing the oldest described sector (240) is done using the second address pointer.

2. The method of claim 1, wherein upon completion of the write operation, the first address pointer is directed (140, 330) to the first free sector of the memory when the previously used sector is the last sector of the memory (530) and the data as a whole no longer fits that sector (520); and
wherein upon completion of the erasing operation, the second address pointer is set (570) to the first described sector of the memory when the last erased sector is the last sector of the memory (530).

3. The method of any preceding claim, wherein the writing comprises storing, for each written data structure, an identifier of a format of the data structure and a check number.

4. The method of claim 3, wherein non-invalidated content comprises a data structure whose check number is valid.

5. The method of claim 3 or 4, wherein the check number is a cyclic redundancy check, CRC.

6. The method of any of claims 3 to 5, wherein a write job rewrites (310) data that has already been written in modified form, and wherein the data that has already been written is invalidated (320) upon completion of the write job, in particular wherein the invalidating comprises changing the identifier of the format of the written data.

7. An apparatus comprising a memory that is divided into sectors;
wherein the apparatus is configured to store data in consecutive sectors of the memory and each write to a new sector (120) when the data as a whole no longer fits a previously used sector (110);
wherein the apparatus is further configured, in response to writing a new sector (120) by a process, to read in (210) non-invalidated content of the oldest sector of the memory, write (220) to the next sector, and erase (240) the oldest described sector;
**characterized in that** the erasing operation is stopped (440) when a write or read job arrives (410) during the erasing operation, and wherein the stopped erasing operation is continued (460) when the write or read job is completed (450);
wherein the apparatus is further configured, upon completion of a write operation, to set (140) a first address pointer to the first free address after the written data;
wherein the apparatus is further configured, upon completion of an erasing operation, to set (250) a second address pointer to the sector following the last erased sector; and
wherein storing data to a new sector (120) is done using the first address pointer and erasing the oldest described sector (240) is done using the second address pointer.

8. The apparatus of claim 7, wherein the apparatus is further configured, upon completion of the write operation, to direct (140, 330) the first address pointer to the first free sector of the memory when the previously used sector is the last sector of the memory (530) and the data as a whole no longer fits that sector (520); and
wherein the apparatus is further configured, upon completion of the write operation, to set (570) the second address pointer to the first described sector of the memory when the last erased sector is the last sector of the memory (530).

9. The apparatus of any of claims 7 to 8, wherein the writing comprises storing, for each written data structure, an identifier of a format of the data structure and a check number.

10. The apparatus of claim 9, wherein non-invalidated content comprises a data structure whose check number is valid.

11. The apparatus of claim 9 or 10, wherein the check number is a cyclic redundancy check, CRC.

12. The apparatus of any of claims 9 to 11, wherein a write job rewrites (310) data that has already been written in modified form, and wherein the data that has already been written is invalidated (320) upon completion of the write job, in particular wherein the invalidating comprises changing the identifier of the format of the written data.

13. A computer-readable medium having stored thereon instructions that, when executed by a processor, perform the method of any of claims 1 to 6.

## Revendications

1. Procédé comprenant :
le stockage de données dans une mémoire flash non volatile divisée en secteurs, les données étant stockées dans des secteurs successifs et chacune étant écrite (120) dans un nouveau secteur lorsque les données dans leur ensemble ne correspondent plus à un secteur précédemment utilisé (110) ;
dans lequel, en réponse à l'écriture d'un nouveau secteur (120), un processus lit (210) un contenu non invalidé du plus ancien secteur décrit de la mémoire, écrit (220) dans le secteur suivant et efface (240) le plus ancien secteur ;
**caractérisé en ce que** l'opération d'effacement est arrêtée (440) lorsqu'une tâche d'écriture ou de lecture arrive (410) pendant l'opération d'effacement, et dans lequel l'opération d'effacement arrêtée est poursuivie (460) lorsque la tâche d'écriture ou de lecture est terminée (450) ;
dans lequel, à la fin d'une opération d'écriture, un premier pointeur d'adresse est réglé (140) sur la première adresse libre après les données écrites ;
dans lequel, à la fin de l'opération d'effacement, un second pointeur d'adresse est réglé (250) sur le secteur suivant le secteur effacé ; et
dans lequel le stockage de données dans un nouveau secteur (120) est effectué sur la base du premier pointeur d'adresse et l'effacement du plus ancien secteur décrit (240) est effectué sur la base du second pointeur d'adresse.

2. Procédé selon la revendication 1, dans lequel, à la fin de l'opération d'écriture, le premier pointeur d'adresse est dirigé (140, 330) sur le premier secteur libre de la mémoire lorsque le secteur précédemment utilisé est le dernier secteur de la mémoire (530) et les données dans leur ensemble ne correspondent plus à ce secteur (520) ; et
dans lequel, à la fin de l'opération d'effacement, le second pointeur d'adresse est réglé (570) sur le premier secteur décrit de la mémoire lorsque le dernier secteur effacé est le dernier secteur de la mémoire (530).

3. Procédé selon l'une quelconque des revendications précédentes, dans lequel l'écriture comprend le stockage, pour chaque structure de données écrite, d'un identifiant d'un format de la structure de données et d'un numéro de contrôle.

4. Procédé selon la revendication 3, dans lequel le contenu non invalidé comprend une structure de données dont le numéro de contrôle est valide.

5. Procédé selon la revendication 3 ou 4, dans lequel le numéro de contrôle est un contrôle de redondance cyclique, CRC.

6. Procédé selon l'une quelconque des revendications 3 à 5, dans lequel une tâche d'écriture réécrit (310) des données qui ont déjà été écrites sous une forme modifiée, et dans lequel les données déjà écrites sont invalidées (320) à la fin de la tâche d'écriture, en particulier dans lequel l'invalidation comprend la modification de l'identifiant du format des données écrites.

7. Appareil comprenant une mémoire divisée en secteurs ;
l'appareil étant configuré pour stocker des données dans des secteurs successifs de la mémoire et écrire (120) chacune dans un nouveau secteur lorsque les données dans leur ensemble ne correspondent plus à un secteur précédemment utilisé (110) ;
l'appareil étant en outre configuré pour lire (210), en réponse à l'écriture d'un nouveau secteur (120) par un processus, un contenu non invalidé du plus ancien secteur de la mémoire, écrire (220) dans le secteur suivant et effacer (240) le plus ancien secteur décrit ;
**caractérisé en ce que** l'opération d'effacement est arrêtée (440) lorsqu'une tâche d'écriture ou de lecture arrive (410) pendant l'opération d'effacement, et dans lequel l'opération d'effacement arrêtée est poursuivie (460) lorsque la tâche d'écriture ou de lecture est terminée (450) ;
l'appareil étant en outre configuré pour régler (140), à la fin d'une opération d'écriture, un premier pointeur d'adresse sur la première adresse libre après les données écrites ;
l'appareil étant en outre configuré pour régler (250), à la fin d'une opération d'effacement, un second pointeur d'adresse sur le secteur suivant le dernier secteur effacé ; et
dans lequel le stockage de données dans un nouveau secteur (120) est effectué sur la base du premier pointeur d'adresse et l'effacement du plus ancien secteur décrit (240) est effectué sur la base du second pointeur d'adresse.

8. Appareil selon la revendication 7, dans lequel l'appareil est en outre configuré pour diriger (140, 330), à la fin de l'opération d'écriture, le premier pointeur d'adresse sur le premier secteur libre de la mémoire lorsque le secteur précédemment utilisé est le dernier secteur de la mémoire (530) et les données dans leur ensemble ne correspondent plus à ce secteur (520) ; et
l'appareil étant en outre configuré pour régler (570), à la fin de l'opération d'écriture, le second pointeur d'adresse sur le premier secteur décrit de la mémoire lorsque le dernier secteur effacé est le dernier secteur de la mémoire (530).

9. Appareil selon l'une quelconque des revendications 7 à 8, dans lequel l'écriture comprend le stockage, pour chaque structure de données écrite, d'un identifiant d'un format de la structure de données et d'un numéro de contrôle.

10. Appareil selon la revendication 9, dans lequel le contenu non invalidé comprend une structure de données dont le numéro de contrôle est valide.

11. Appareil selon la revendication 9 ou 10, dans lequel le numéro de contrôle est un contrôle de redondance cyclique, CRC.

12. Appareil selon l'une quelconque des revendications 9 à 11, dans lequel une tâche d'écriture réécrit (310) des données qui ont déjà été écrites sous une forme modifiée, et dans lequel les données déjà écrites sont invalidées (320) à la fin de la tâche d'écriture, en particulier dans lequel l'invalidation comprend la modification de l'identifiant du format des données écrites.

13. Support lisible par ordinateur sur lequel sont stockées des instructions qui, lorsqu'elles sont exécutées par un processeur, mettent en oeuvre le procédé selon l'une quelconque des revendications 1 à 6.
